# EUROPÄISCHE PATENTSCHRIFT

(11) **EP 0 883 513 B1**
(45) Veröffentlichungstag und Bekanntmachung des Hinweises auf die Patenterteilung: **31.10.2001**
(21) Anmeldenummer: 97902133.4
(22) Anmeldetag: 14.02.1997
(51) Int. Cl.: B60P 1/64

(54) **SCHNELLWECHSELEINRICHTUNG, EINRICHTUNG SOWIE VERWENDUNG DERSELBEN ZUM TRANSPORT VON LEICHTEN GÜTERN**
QUICK-CHANGE ATTACHMENT, MEANS AND USE THEREOF FOR THE TRANSPORTATION OF LIGHTWEIGHT GOODS
DISPOSITIF DE TRANSBORDEMENT RAPIDE, SON AGENCEMENT ET SON UTILISATION POUR LE TRANSPORT DE MARCHANDISES LEGERES

(30) Priorität: 01.03.1996 CH 54296; 09.10.1996 WO PCT/CH96/00357
(43) Veröffentlichungstag der Anmeldung: 16.12.1998
(73) Patentinhaber: Lehner, Guido, 9403 Goldach (CH)
(72) Erfinder: LEHNER, Guido, CH-9403 Goldach (CH); MÜLLER, Erich, CH-9302 Krohnbühl (CH); SCHLEINZER, Peter, CH-9112 Schachen (CH)
(74) Vertreter: Ackermann, Ernst
(86) Internationale Anmeldenummer: CH9700050
(87) Internationale Veröffentlichungsnummer: WO9731801

(56) Entgegenhaltungen:
- DE-A- 1 580 354
- DE-U- 1 939 002
- DE-U- 1 968 454
- DE-U- 9 113 145
- GB-A- 1 198 635
- GB-A- 1 327 821
- GB-A- 2 294 243
- US-A- 4 339 148

## Beschreibung

### Technisches Gebiet

Die Erfindung betrifft eine Einrichtung zum Transport von sperrigen Gütern mit einer Wechselbühne sowie einem abheb- und absenkbaren Aufbau der wahlweise auf einem Fahrgestell transportierbar oder auf dem Boden über Stützen abstützbar ist und als Schnellwechseleinrichtung im hinteren und vorderen Bereich des Aufbaues wirksame und je im Bereich der Längsmittelachse angeordnete Einfangtrichter-Zentriereinheiten aufweist. Die Erfindung betrifft ferner die Verwendung der Einrichtung.

### Stand der Technik

Der Gütertransport hat in den vergangenen 50 Jahren eine enorme Entwicklung erfahren. Es haben sich Transportfahrzeuge der verschiedensten Grössen von z.Bsp. 3 bis 40 Tonnen mit zum Teil extrem grossen Ladevolumen durchgesetzt. Bei den unteren Gewichtsklassen sind die Kleinlastwagen oder sogenannte leichte Motorfahrzeuge und Lieferwagen stark verbreitet. Wenn auch mit Ausnahmen, kann gesagt werden, dass das Ladevolumen mit der zulässigen Tonnage steigt. Dies macht auch Sinn, wenn man an Güter wie Gesteine oder Maschinen denkt. Es entsteht jedoch eine völlige Fehlproportion, wenn es sich um leichte Güter wie Isolationsmaterialien handelt. Je nach besonderen Materialeigenschaften liegt das Gewicht von 20 bis 30 m³ Isoliermaterial bei weniger als zwei Tonnen. Das Transportfahrzeug das üblicherweise für eine solche Menge benutzt wird, könnte ohne weiteres 20 Tonnen laden. Das effektive Ladegewicht zu dem möglichen Ladegewicht liegt dabei im Verhältnis von mehr als 1 : 10 auseinander. Ein entsprechender Transport ist zumindest grundsätzlich nicht ökonomisch, dies umso mehr, als Transporte mit schweren Lastkraftwagen kostspieliger sind. Jedes grössere Transportunternehmen verfügt, um allen möglichen Transportaufgaben entsprechen zu können, über Lastwagen mit unterschiedlichen Aufbauten, jedoch über mehr Fahrzeuge als Fahrer. Ist ein Fahrer mit einem Lastwagen unterwegs, so bezahlt der Kunde sowohl die Kosten für den Lastwagen wie für den Fahrer. Bei kurzen Fahrstrecken kann die Auflade- und Abladezeit einen sehr wesentlichen Kostenanteil ergeben. In den letzten Jahren sind deshalb viele Ladehilfen entwickelt worden, besonders Autokrane und hydraulisch heb-und senkbare Ladebühnen. Bei sperrigen, leichten Gütern ist vielfach nicht einmal die Aufladezeit oder die Abladezeit an sich sehr kritisch. Wie manchmal beobachtet wird, kann in kürzester Zeit eine grosse Menge Isolationsmaterial ausgeladen bzw. aus dem Wagen geworfen werden. Das nachfolgende trockene Lagern über Tage oder Wochen ist häufig nicht gelöst, besonders wenn es sich um Baustellen handelt. Die GB-PS 1 327 821 zeigt eine Lösung für den schnellen Wechsel eines Fahrzeug-Aufbaues. Da es sich um einen Personentransportaufbau handelt, kann der betreffende Container ohne Ladung d.h. ohne die Passagiere relativ schnell von einem Steh- zu einem Fahrzeug und umgekehrt geändert werden. Im hinteren und vorderen Bereich des Aufbaues sind für die Erleichterung des Wechsels je im Bereich der Längsmittenachse Einfangtrichter-Zentriereinheiten angeordnet. Nachteilig dabei ist, dass während der Zentrierfunktion beim Aufladen enorme und undefinierbare Schiebekräfte zwischen den Stützen des Aufbaues und dem Fahrgestell entstehen. Dies würde beim vollen Container Probleme geben. Recht erfolgreich konnte der Transport von leichten Konsumgütern zwischen Zentrallagern und grossen Verkaufszentren gelöst werden. Mit besonderen Combitrailern wird hier die Ware im Zentrallager aufgeladen und der ganze Lastwagenaufbau auf zwei Rädern und Stützbeinen beim Verkaufszentrum so lange abgestellt, bis es von dem Personal des Verkaufszentrums abgeladen ist. Hier besteht der Lastkrafwagen aus zwei Fahrzeugen, dem vorderen eigentlichen Lastwagen oder Zugfahrzeug sowie einem hinteren, einachsigen Ladeteil bzw. Auflieger. Diese Lösung hat sich bewährt, setzt aber zwei, im Grunde gleichartige Auf- bzw. Abladestellen, insbesondere plane Hartbeläge an beiden Orten, sowie Gebäudedimensionen für die Grösse von Lastkraftwagen voraus. Für Baustellen sind solche Combitrailer soweit dem Anmelder bekannt ist, nicht im Einsatz. Es gibt dazu wohl mehrere Gründe. Der Kaufpreis von Lastwagenaufbauten ist verhältnismässig gross, da es sich um Spezialanfertigungen handelt, und deshalb ein tagelanges Stehen zu teuer wäre. Besonders kostenaufwendig ist jedoch der Speziallastwagen. In diesem Fall ist sowohl das motorische Zugmittel wie der Lastwagenaufbau teuer. Meistens wird auch hier für wenige Tonnen Transportgut ein Lastwagen für 20 Tonnen und mehr Nutzlast verwendet. Schwere Nutzfahrzeug sind daran zu erkennen, dass sie drei oder vier Achsen aufweisen. Bei mittelschweren Fahrzeugen werden die hinteren Räder vielfach doppelt ausgeführt. Auf einer Achse befinden sich dann vier Räder, damit mehr als acht Tonnen Güter transportiert werden können. Bei mittelschwerern und schweren Transportfahrzeugen hat der Einsatz von sogenannten Wechselpritschen eine grosse Verbreitung gefunden. Eine solche Wechselpritsche ist z.Bsp. in der Deutschen Patentanmeldung 19 39 002 beschrieben. Diese schlägt vor, über mehrere Luftfederbälge die am Fahrgestell befestigt sind, die Wechselpritsche zu heben und zu senken, je nach dem ob es sich um das Montieren auf dem Fahrgestell handelt, oder das Abstellen auf vier Stützbeinen. Ein besonderes Problem stellt das Sichern der Pritsche mit der schweren oder zumindest mittelschweren Zuladung dar. Hierzu wird z.Bsp. in der DE-OS 40 27 586 sowie auch in der US-PS 4 339 148 ein Sicherungssystem vorgeschlagen, mit welchem grosse, schwere und verwindungssteife Behälter auf einem verwindungsweichen Kraftfahrzeuggestell ohne Schwierigkeiten verankert werden können. Für die Sicherung selbst wird eine kleine Einführ- und Zentrierhilfe vorgesehen, so dass die schweren Körper präzise auf dem Fahrgestell abgesetzt werden können. Diese Lösungen bedingen zusätzliche Hilfen, sei es Umladekräne oder grosse fahrbare Stapelfahrzeuge. Ein entsprechender Wechsel der sei es Umladekräne oder grosse fahrbare Stapelfahrzeuge. Ein entsprechender Wechsel der Pritsche kann deshalb nur an speziell dafür konzipierten Wechselplätzen erfolgen, meistens jedoch nur im eigenen Fuhrparkbereich des Transportunternehmens. Das Fahrzeug soll zuerst mit der richtigen Pritsche für die besondere Transportaufgabe ausgerüstet und dann auf die Reise geschickt werden.

Von den Erfindern ist erkannt worden, dass es für leichte, sperrige Güter von weniger als 8, insbesondere weniger als 4 Tonnen Transportgewicht zur Zeit gar kein sinnvolles Konzept gibt, das sowohl einen oekonomischen Transport wie auch längere Standzeiten von mehreren Tagen, gegebenenfalls mehreren Wochen, gestattet. Es fehlt insbesondere eine grosse, leichte Transporthilfe, die zwischen völlig ungleichen Ortsbedingungen gezügelt werden kann, z.Bsp. für Paketpostverteilung, für Kleinzügelaufgaben, aber auch zwischen einer Produktionsstätte von Isolationsmaterial bzw. zwischen Produktionsanlage und einer Baustelle, oder einem Landwirtschaftsbetrieb und einem Grossverteiler. Es hat sich gezeigt, dass es für leichte, sperrige Güter in der Praxis keine wirtschaftlich sinnvolle "Warenlogistik" gibt, eine Warenlogistik, nach der die Ware von der Produktion bis zur Endverarbeitung optimal transportiert und kostengünstig zwischengelagert wird.

### Darstellung der Erfindung

Der Erfindung wurde nun die Aufgabe zu Grunde gelegt, die ganze Warenlogistik für sperrige, leichte Güter, besonders bei grossem Volumen zu verbessern. Vor allem mit einem Minimum an Invenstitionsaufwand soll ein Maximum an Transportdienstleistung z.Bsp. vom Produzenten bis zum Endverarbeiter erbracht werden, für Transportgewichte von weniger als 8, insbesondere weniger als 4 Tonnen Gesamtgewicht. Dabei soll der Wechsel von Stehzeug-Fahrzeug ohne besondere Hilfsmittel wie Kräne, Gabelstapler usw. an beliebigen Orten, also nicht nur am Heimterminal durch eine Person durchführbar sein.

Die erfindungsgemässe Einrichtung ist dadurch gekennzeichnet, dass die Abhebe- und Absenkvorrichtung wenigstens drei, vorzugsweise vier verteilte Lagerstellen zum synchronen Abheben und Absenken des Aufbaues aufweist, wobei (in Fahrrichtung) vorne und hinten, je vorzugsweise im mittleren Bereich, eine Einfangtrichter/Zentrierkegelkombination angeordnet ist, zum Einfangen und Schieben des Aufbaues mit dem Eigengewicht sowie definierten Absetzen auf dem Fahrgestell.

Die Erfindung betrifft ferner ein Verfahren zum Transport von sperrigen, leichten Gütern auf Ladeflächen mit, den Gütern angepasstem Aufbau, auf einem Fahrgestell, wobei die Ladefläche nach Bedarf, wahlweise auf dem Boden abgestützt oder mit einem, unter die beliebigen Orten, also nicht nur am Heimterminal durch eine Person durchführbar sein. Es war ferner Teilaufgabe der Erfindung, vor allem auch den Übergang von dem eigentlichen Fahrgestell zu dem Aufbau zu verbessern, mit dem Ziel der Tiefhaltung des Fahrzeuggewichtes und damit der maximalen Erhöhung der Zuladung.

Die erfindungsgemässe Einrichtung ist dadurch gekennzeichnet, dass sie mehrere, je im Bereich der äusseren Drittel der Grundfläche des Aufbaues verteilte Hebe-Schiebeeinheiten mit, in einer gemeinsamen Auflageebene liegende Auflageplatte aufweist, wobei die Wechselbühne mit wenigstens zwei Längs- und Quertraversen als Modul ausgebildet und an einem Fahrzeuganhänger oder direkt an dem Motorfahrzeug anbaubar ist, und eine Abhebe-und Absenkvorrichtung aufweist, zum Einfangen und Schieben des Aufbaues mit dem Eigengewicht.

Es ist eine Erfahrungstatsache, dass eine einzelne Person mit einfachen Hilfsmitteln, mehrere hundert kg bewegen kann. Sobald das Gewicht 1 Tonne übersteigt, werden schon besondere Hilfsmittel benötigt. Dies gilt noch verstärkt, wenn es sich nicht nur um ein Gewicht von vielleicht 1 bis 3 Tonnen handelt, sondern wenn das zu bewegende Objekt gross ist. Die Erfinder haben nun erkannt, dass das Hinstellen eines Fahrzeugaufbaues gar kein echtes Problem ist, vor allem wenn am Fahrzeug selbst Hebezeuge vorhanden sind. Heben und Senken ist die einfachste Manipulation. Völlig anders ist die Situation, wenn ein irgendwo auf den Boden über Stützen abgestellter Aufbau von z.Bsp. 2 bis 4 Tonnem Gewicht und einigen Metern Länge auf ein Fahrgestell gebracht werden muss. Mit dem Fahrgestell kann nicht millimetergenau unter den auf Stützen stehenden Aufbau gefahren werden. Genau an diesem Probelm sind sehr wahrscheinlich alle bisherigen Vorschläge gescheitert. Die neue Erfindung schlägt dazu zwei besondere Massnahmen vor:
- im vorderen und hinteren Bereich des Aufbaues wirksame Einfang-Zentriereinheiten
- auf der Fläche des Aufbaues verteilte Hebe-Schiebeeinheiten.
Der Zweck liegt darin, dass der Aufbau auf diese Weise beim Absetzen mit seinem eigenen Gewicht eingefangen und geschoben und in eine genau befinierte Lage auf dem Fahrgestell abgesetzt werden kann. Da für das Aufladen das ganze Gewicht des Aufbaues ausgenützt wird, spielt das Gewicht an sich keine Rolle mehr. Der Vorgang kann deshalb durch eine einzige Person, ohne menschlichen Kraftakt problemlos durchgeführt werden, vor allem wenn die Hebeeinrichtung motorisch angetrieben und steuerbar ist. Der Schnellwechsel hat wie noch dargestellt werden wird, eine mehrfache Bedeutung. Es kann der Aufbau schnell von einem Fahrzeug zu einem Stehzeug gewechselt werden. Ferner kann auch die Art des Aufbaues oder aber ein erster z.Bsp. voller durch einen zweiten leeren schnell gewechselt werden. Die neue Lösung ist ferner durch eine Modulbauweise gekennzeichnet. Ein erstes Modul ist als Wechselbühne mit Lagerstellen sowie mit einer Abhebe- und Absenkvorrichtung ausgebildet. Ein zweites Modul ist als Querträger bzw. Querträgergruppe ausgebildet. Dieses kann als Bausatz an der Unterseite von einem Aufbau befestigt werden. Die beiden Module, das Wechselbühnenmodul und das Aufbaumodul, können nun in grösseren Serien preisgünstig hergestellt werden und den einzelnen Herstellern wie z.Bsp. Fahrzeugbauern oder Containerherstellern für den festen Einbau durch diese geliefert werden. Von den Erfindern ist erkannt worden, dass bei Ausnutzung des bisher vorhandenen Totraumes für den Einfederweg des Fahrgestelles bei Leichtfahrzeugen für eine erfindungsgemässe Wechselbühne viele Probleme des Standes der Technik gleichzeitig lösbar sind. Insbesondere kann die Wechselbühne in Leichtbauweise hergestellt werden, und reduziert das Zuladegewicht nur wenig. Die Wechselbühne ist besonders vorteilhaft für einen Fahrzeuganhänger, kann aber auch direkt an dem Motorfahrzeug selbst angebaut werden. Die Wechselbühne wird als Auflageplattform für den Aufbau ausgebildet, wobei eine kleinhubige Abhebe- und Absenkvorrichtung fest an der Wechselbühne angeordnet ist. Besonders bevorzugt weist die Wechselbühne wenigstens je zwei Längs- und Quertraversen mit einem Längs- und Querverstellbereich auf, zur Anpassung an verschiedenste Fahrgestelle. An einem zusätzlichen mittleren Längsholmen der Wechselbühne können z.Bsp. das Aggregat für den motorischen Antrieb, die Steuerleitungen und die Steuerelemente für die Abhebe- und Absenkvorrichtung aufgehängt werden. Gemäss einer ganz besonders bevorzugten Ausgestaltung werden die Längs- und Quertraversen als Steckprofile ausgebildet, wobei die Längstraversen eine Anzahl Ausnehmungen aufweisen, für das Einschieben auf ein beliebiges Breitenmass in Bezug auf die Längstraversen. Diese Lösung gestattet in der Breite, innerhalb eines Maximums und eines Minimums, jedes beliebige Mass einzustellen. Das gegebenenfalls überstehende Ende kann vom Fahrzeugbauer abgeschnitten werden.

Vorteilhafterweise weist der Aufbau wenigstens zwei fest angebrachte Auflagequerträger auf, an denen Bodenstützen anbringbar sind, für einen schnellen Wechsel des Aufbaues als Stehzeug oder als Teil des Fahrzeuges. Es ist aber auch möglich drei oder mehr Auflagequerträger anzuordnen. Eine Haltesicherung kann über die motorischen Antriebsmittel betätigt werden und die Verbindung lösen bzw. öffnen. Die Auflagequerträger des Aufbaues weisen je zwei, vorzugsweise ebene Stützflächen sowie einen mittleren Zentriertrichter auf, wobei den Stützflächen je eine Hebeeinrichtung und den Zentriervorrichtungen je ein Zentrierbolzen zugeordnet ist, welche an der Wechselbühne fixiert sind. Werden drei oder mehr Auflageträger eingesetzt, so können allen entsprechenden Stützflächen je eine Hebeeinrichtung, bevorzugt als hydraulisch betätigbarer Zylinder, zugeordnet werden. Es werden den zwei äusseren Auflagequerträgern je eine mittlere Zentriervorrichtung zugeordnet, also im ganzen für einen Aufbau bevorzugt zwei Zentriervorrichtungen. Die neue Lösung gestattet ferner an den Quer- und Längstraversen Seitenverkleidungsteile zu befestigen, wobei die Länge der Quer- und Längstraversen jeweils dem konkreten Fahrgestell entsprechend angepasst bzw. gekürzt werden. Es kann irgend eine Ladefläche bzw. ein Aufbau nach Bedarf wahlweise fest auf den Boden abgestützt oder mit einem, vorzugsweise unter den Aufbau schiebbaren Fahrgestell verbunden werden. Dabei wird die Plattform durch eine am Fahrgestell angeordnete Abhebe- und Absenkeinrichtung auf das Fahrgestell abgesetzt bzw. vom Fahrgestell abgehoben und kann dann durch ein leichtes Motorfahrzeug transportiert werden. Der Aufbau bzw. die Plattform mit irgend einem Aufbau bekommt gemäss der neuen Erfindung die Funktion einer Zuladung und muss den entsprechenden Verkehrsregeln entsprechen. Wichtig ist dabei, dass insbesondere die Wechselbühne möglichst leicht gebaut wird, da sonst das freie Zuladegewicht eingeschränkt wird. Von den Erfindern ist ferner erkannt worden, dass die Entwicklung des ganzen Transportwesens sich gleichsam nach der Gesamtentwicklung der letzten Jahrzehnte gerichtet hat. Diese wies zwei wesentliche Grundzüge auf, nämlich immer schneller, immer grösser. Dabei wurden aber grosse Bereiche des Warenhandlings nicht mehr beachtet. Es sind dies die sperrigen, leichten Stückgüter und ganz besonders der Faktor Zeit. Es ist heute kein Problem, selbst grösste Volumen schnell über weite Distanzen zu transportieren. Sind die Güter am Zielort, beginnen aber erst die Probleme, da die Übernahme von grossen Volumen oft gar nicht mehr im voraus planbar ist. Das Fahrzeug muss dann über Gebühren lange am Zielort stillstehen, so dass aus einem Fahrzeug ein sehr teures Stehzeug wird. Mit der neuen Erfindung wird ganz besonders die Zeitproblematik auf sehr oekonomische Weise gelöst, dadurch dass verschiedene Schwerpunkte in Kombination vorgeschlagen werden: Da grossvolumige Leichtgüter anvisiert sind, kann das Fahrgestell durch ein Kleinlastwagen von z.Bsp. 3,5 oder 7 Tonnen oder ein leichtes Motorfahrzeug wie Lieferwagen, zugstarke Jeeps usw. von Ort zu Ort verschoben werden. Dabei kann auch das Motorfahrzeug selbst erfindungsgemäss ausgebildet werden. Die Ladefläche kann mittels Stützen auf den Boden abgestellt oder mit einem Fahrgestell verbunden werden. Das Fahrgestell kann die fest auf dem Boden abgestützte Plattform unterfahren. Das Fahrgestell weist selbst eine kleinhubige Abhebe- und Absenkvorrichtung auf, und versetzt den Fahrer in die Lage, ohne weitere Hilfen (wie Kran, Gabelstapler usw.) den jeweiligen Wechsel (Stehzeug-Fahrzeug) schnell und im Einmann-Betrieb, also durch eine Person einfach und ohne besondere Gefahr durchzuführen, da die Abhebe- und Absenkvorrichtung nur um einen Hub von etwa 30 bis 40 cm, also um die Länge eines Fusses verstellt werden muss.

Die neue Abhebe- und Absenkvorrichtung hat im Normalbetrieb die alleinige Funktion des Wechsels der Plattform von Stehzeug zum Fahrzug und umgekehrt. Es ist deshalb gegenüber den bekannten Umladeeinrichtungen wie Kräne, Stapler usw. viel kostengünstiger und ist fester Bestandteil des Fahrgestelles. Eine motorische Hebe- und Senkvorrichtung greift über Lagerstellen ein und ist bevorzugt zum synchronen Abheben bzw. Absenken der Lagerstellen ausgebildet. Vier Hebe- und Senkvorrichtung sind dazu über die Aufbaues, wobei vorne und hinten, je im mittleren Bereich ein Zentrierkegel angeordnet ist für eine Einfangtrichter/Zentrierkegelkombination, zum Einfangen und Schieben des Aufbaues mit dem Eigengewicht sowie definierten Absetzen auf dem Fahrgestell.

Insbesondere wenn der Aufbau als Container ausgebildet ist, der als Transportgefäss verwendet und z.Bsp. als Zügelcontainer oder für die Paketpostverteilung oder für leichte Industriegüter wie Isolationsmaterialien können die Längsseitenflächen bevorzugt als Werbeflächen mit entsprechenden Aufklebeplatten ausgebildet und verwendet werden.

Die neue Erfindung löst das zentrale Problem des Gewichtes. Bei einem Leichtfahrzeug wird versucht, jedes unnötige Kilogramm Gewicht am Fahrzeug selbst zu sparen. Dies bedeutet, dass besonders auch der Aufbau, im Gegensatz zu den mittelschweren und schweren Transportfahrzeugen in Leichtbauweise hergestellt sein soll. Eine Leichtbauweise hat aber in der Regel eine geringe Verwindungssteifigkeit. Die neue Erfindung schlägt nicht nur eine neuartige Wechselmechanik vor, sondern nutzt diese gleichzeitig aus, um in jeder Phase des Einsatzes einen optimalen Kräfteverlauf sicherzustellen, durch das klare Zusammenfassen in bestimmten Achsen resp. Ebenen. Bekannt ist das System der sogenannten Wechselmulden für Bauschutt. Eine Bauschuttmulde wird so lange am Ort gelassen, bis sie für die Wegnahme bereit ist. Spezielle Muldenfahrzeuge bringen und holen die Mulden. Die neue Erfindung gestattet nun sinngemäss ein System von Wechselcontainern aufzubauen. Die Container bekommen auf diese Weise eine eigenständige Funktion und werden wie bei den Bauschuttmulden in sehr grosser Stückzahl eingesetzt. Damit unterscheidet sich das neue Konzept vom System der Wechselpritschen, bei dem der Fahrer nur mit verschiedenen Pritschen unterwegs ist. Wechselpritschen geben die Möglichkeit am selben Lastkraftwagen verschiedene Pritschen je nach Einsatz zu montieren. Wechselpritschen bleiben beim Fahrzeug oder auf dem Abstellplatz des Transportunternehmens. Wechselcontainer gemäss der neuen Erfindung sind wie die Wechselmulden die meiste Zeit ohne das Fahrzeug am Einsatzort und können deshalb als Zwischenlager benutzt werden.

### Kurze Beschreibung der Erfindung

Die Erfindung wird nun an Hand einiger Ausführungsbeispiele mit weiteren Einzelheiten erläutert. Es zeigen:
die Figur 1, 1a und 1b Grunddispositionen für den Einsatz der neuen Erfindung;
die Figur 2, 2a und 2b drei Situationen beim Montieren eines Aufbaues auf ein Fahrgestell;
die Figur 3 die Wirkung von zwei Einfangstrichter/Zentrierkugelkombinationen, in Bezug auf die Längsachse und
sind, einen drei bis vier Tonnen-Anhänger zu ziehen, ferner z.Bsp. 15, 30 oder mehr preisgünstige Aufbauten. Da die Kosten für die Ladefläche mit Aufbau bzw. entsprechenden Container nur einen Bruchteil eines leichten Kraftfährzeuges ausmachen, können diese sehr kostengünstig am Zielort, bis zur vollständigen Entleerung hingestellt werden. Bei vielen Handwerkern ist es üblich, dass ein wesentlicher Teil des Montagehilfsmateriales sowie die benötigten Werkzeuge täglich, teils sogar zwei mal täglich von dem Firmensitz zu der Baustelle gefahren werden. Mit dem System Wechselcontainer entfallen ein Grossteil der Fahrten. Die Anzahl der erforderlichen Container, Fahrgestelle und Zugfahrzeuge richtet sich nach den besonderen Umständen. Die Erfindung erlaubt eine ganze Anzahl weiterer, vorteilhafter Einsätze. So kann der Aufbau als Baracke ausgebildet werden, welche für die Stehzeit auf vorzugsweise höhenverstellbaren Stützbeinen abgestützt und für den Wechsel an eine nächste Baustelle mittels einem Fahrgestell bzw. einem leichten Motorfahrzeug gezügelt wird. Der Aufbau ist beliebig adaptierbar und wird gemäss einer weiteren vorteilhaften Ausgestaltung als Container ausgebildet, der zwischen ungleichartigen Orten als Transportgefäss verwendet und z.Bsp. beim Produzenten für leichte landwirtschaftliche Konsumgüter, für Möbelumzüge, die Paketpost für Harasse oder für leichte Industriegüter wie Isolationsmaterialien gefüllt, auf ein Fahrgestell aufgesetzt und wenigstens auf einer Teilstrecke bis zum Zielort mit einem leichten Motorfahrzeug transportiert wird. Für einige Anwendungen ist es vorteilhaft wenn die Höhe der Stützen einstellbar ist, z.Bsp. hydraulisch, oder mit dem System der bekannten Adria-Baustützen. Dies gestattet auch die Ladefläche in eine optimale Lage zu stellen, und allenfalls die Höhe jeder Stütze dem Gelände anzupassen, oder die Plattform in eine horizontale Lage zu bringen. Die Erfindung ermöglicht auch, dass die Plattform direkt auf eine Ladefläche eines Transportmittels oder auf den Boden abstellbar ausgebildet ist, derart, dass z.Bsp. für grosse Distanzen die Stückgüter z.Bsp. mit Bahnwagen transportiert werden, wo das Umladen mittels Kranhaken oder Gabelstapler erfolgt. Weiterhin ist es möglich, dass der Aufbau als Messecontainer ausgebildet wird, derart, dass damit die für einen Messestand bzw. Verkaufsstand benötigten Leichtteile transportiert und Plattform mit Aufbau als Messestand oder Teil eines Messestandes bzw. Verkaufsstandes eingesetzt wird.

Die neue Lösung erlaubt viele weitere Ausgestaltungen, wofür auch auf die Ansprüche 2 bis 15 Bezug genommen wird. Die nutzbare Arbeitsfläche der Einfangtrichter und der Auflagerplatten ist etwa gleich gross. Die Manövriergenauigkeit eines Fahrzeuges liegt bei etwa 20 bis 50 cm. Entsprechend wird vorgeschlagen, den Durchmesser bzw. die Seitenabmessung von Auflagerplatten und Einfangtrichter zu dimensionieren. Ein einigermassen geübter Lenker eines Fahrzeuges ist in der Lage, das Fahrzeug mit einer Abweichung von 10 bis 25 cm auf ein vorgegebenes Feld zu parkieren. Aus vielerlei Gründen werden die Stützbeine nicht unnötig weit auseinander eingesetzt. Zum einen soll die benötigte Fläche bzw. Seitenabmessung eines Stehzeuges so klein wie möglich sein. Zum anderen wirkt sich eine zu grosse Ausladung ungünstig aus auf die kräftemässige Beanspruchung des Aufbaues. Kann nun ein Fahrer, sei es einen Anhänger oder das Fahrzeug selbst innerhalb dem genannten Spiel von 20 bis 50 cm parkieren ist auch schon das präzise Abstellen des Aufbaues auf dem Fahrgestell sichergestellt. Ein weiterer wichtiger Punkt liegt darin, dass der Einfangtrichter nicht zu hoch bauen darf und nicht in die Ladefläche hinausragen soll. Von einer gegebenen Grundfläche ausgehend wird die Höhe des Trichters um so grösser je spitzer der Winkel ist. Bevorzugt wird der Winkel von mehr als 90°. Etwa 120° stellt einen optimalen Kompromiss für den Bewegungsablauf wie auch die Bauhöhe dar. Die Auflageplatten bilden vorzugsweise zusammen mit den Unterkanten der Einfangtrichter eine gemeinsame Auflageebene. Damit kann der Aufbau z.Bsp. als leerer Container auch ohne Stützen irgendwo abgestellt oder auch übereinander gestapelt oder mit Eisenbahn oder Lastwagen transportiert werden. Die Lagerstellen werden vorteilhafterweise an zwei Hohlprofil-Querträgern ausgebildet, in welchen die Stützen einsteckbar fixiert werden können. An der Decke des Containes werden in zwei Querebenen, welche die Lagerstellen einschliessen, Kranhaken angeordnet, ferner können zwischen den Auflagerstellen Anlageflächen für Gabelstapler-Eingriffe angeordnet werden. Gemäss einer weiteren Ausgestaltung wird zwischen der Plattform und dem Fahrgestell eine mechanisch oder hydraulisch betätigbare Sicherung angeordnet, welche an den Zentriertrichtern angreifen. Die Ausnützung von besonderen Querebenen mit den Querträgern hat den grossen Vorteil, dass die wesentlichen Kräfte ohne Belastung der Aufbaukonstruktion direkt auf das Fahrgestell bzw. auf den Boden abgefangen werden. Der Aufbau kann leichter gebaut werden.

Die neue Lösung betrifft ferner die Verwendung der Einrichtung gemäss Ansprüche 16 und 17 auf die Bezug genommen wird.

Insbesondere wenn der Aufbau als Container ausgebildet ist, der als Transportgefäss verwendet und z.Bsp. als Zügelcontainer oder für die Paketpostverteilung oder für leichte Industriegüter wie Isolationsmaterialien können bevorzugt die Längsseitenflächen als Werbeflächen mit entsprechenden Aufklebeplatten ausgebildet und verwendet werden.

Die neue Erfindung löst mit der Konzentrierung und dem Abfangen der Kräfte in wenige Ebenen das zentrale Problem des Gewichtes. Bei einem Leichtfahrzeug wird versucht, jedes unnötige Kilogramm Gewicht am Fahrzeug selbst zu sparen. Dies bedeutet, dass besonders auch der Aufbau, im Gegensatz zu den mittelschweren und schweren Transportfahrzeugen in Leichtbauweise hergestellt sein soll. Eine Leichtbauweise hat aber in der Regel eine geringe Verwindungssteifigkeit. Die neue Erfindung schlägt nicht nur eine neuartige Wechselmechanik vor, sondern nutzt diese gleichzeitig aus, um in jeder Phase des Einsatzes einen optimalen Kräfteverlauf sicherzustellen, durch das klare Zusammenfassen in bestimmten Achsen resp. Ebenen. Bekannt ist das System der schweren Wechselmulden für Bauschutt. Eine Bauschuttmulde wird so lange am Ort gelassen, bis sie für die Wegnahme bereit ist. Spezielle Muldenfahrzeuge bringen und holen die Mulden. Die neue Erfindung gestattet nun sinngemäss ein System von Wechselcontainern aufzubauen. Die Container bekommen auf diese Weise eine eigenständige Funktion und werden wie bei den Bauschuttmulden in sehr grosser Stückzahl eingesetzt. Wechselpritschen geben mit ihrem Wechselsystem die Möglichkeit am selben Lastkraftwagen verschiedene Pritschen je nach Einsatz zu montieren. Wechselpritschen bleiben beim Fahrzeug oder auf dem Abstellplatz des Transportunternehmens. Es hat sich nun gezeigt, dass bei entsprechend stabiler Ausführung das Konzept des Einfangens und Schiebens des Aufbaues mit dem Eigengewicht sowie definiertem Absetzen auf dem Fahrgestell, mit der beschriebenen Hebel-Schiebeeinheit sowie der Einfang-Zentriereinheit auch bei schweren Lastwagen einsetzbar ist. Gegebenenfalls können anstelle von zwei auch drei oder vier Zentriertrichtereinheiten vorgesehen werden.

### Kurze Beschreibung der Erfindung

Die Erfindung wird nun an Hand einiger Ausführungsbeispiele mit weiteren Einzelheiten erläutert. Es zeigen:

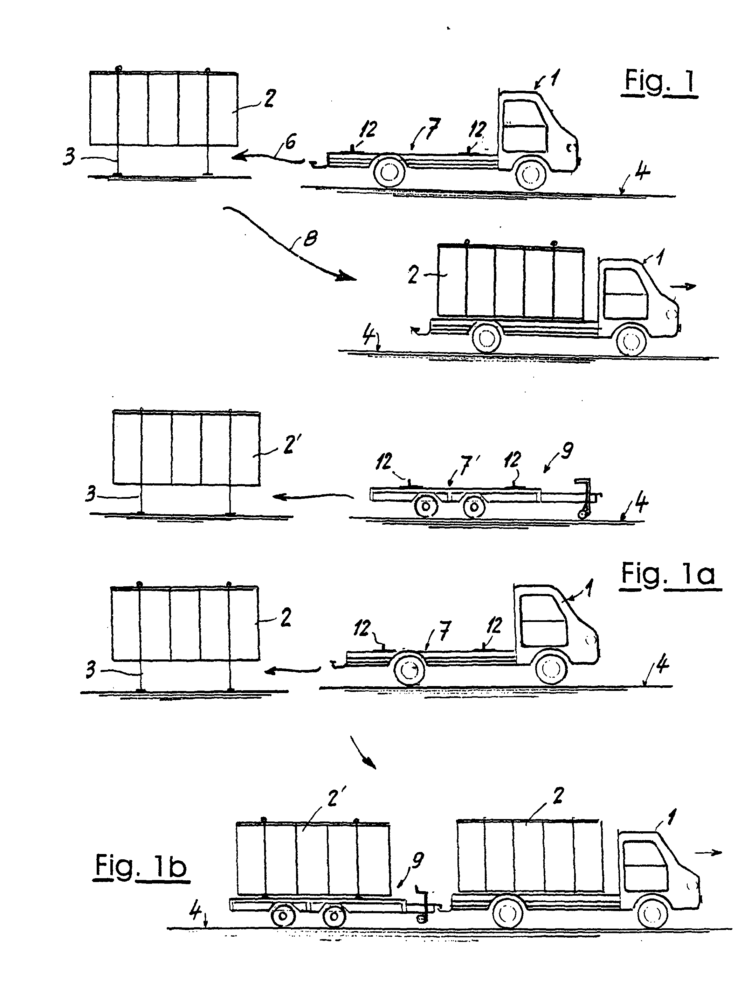

die Figur 1, 1a und 1b Grunddispositionen für den Einsatz der neuen Erfindung;

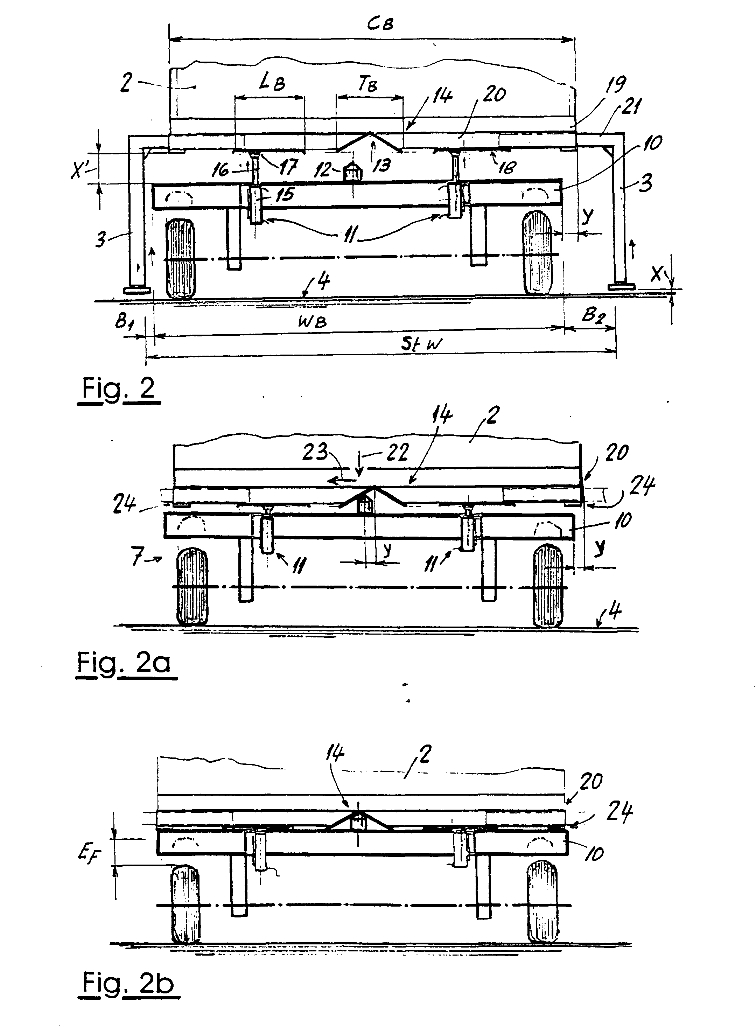

die Figur 2, 2a und 2b drei Situationen beim Montieren eines Aufbaues auf ein Fahrgestell;

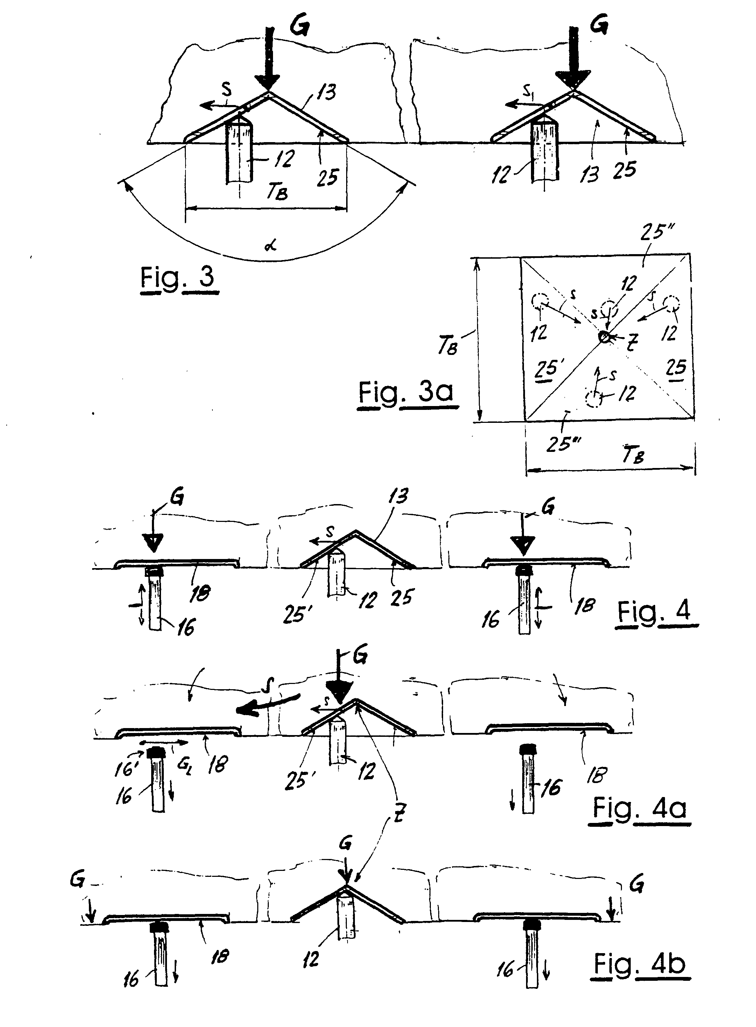

die Figur 3 die Wirkung von zwei Einfangstrichter/Zentrierkegelkombinationen, in Bezug auf die Längsachse;
die Figur 3a verschiedene Positionen eines Zentrierkegels in Bezug auf einen einzelnen Zentriertrichter;
die Figur 4, 4a und 4b verschiedene Situationen beim Absenken und Montieren eines Aufbaues auf ein Fahrgestell;

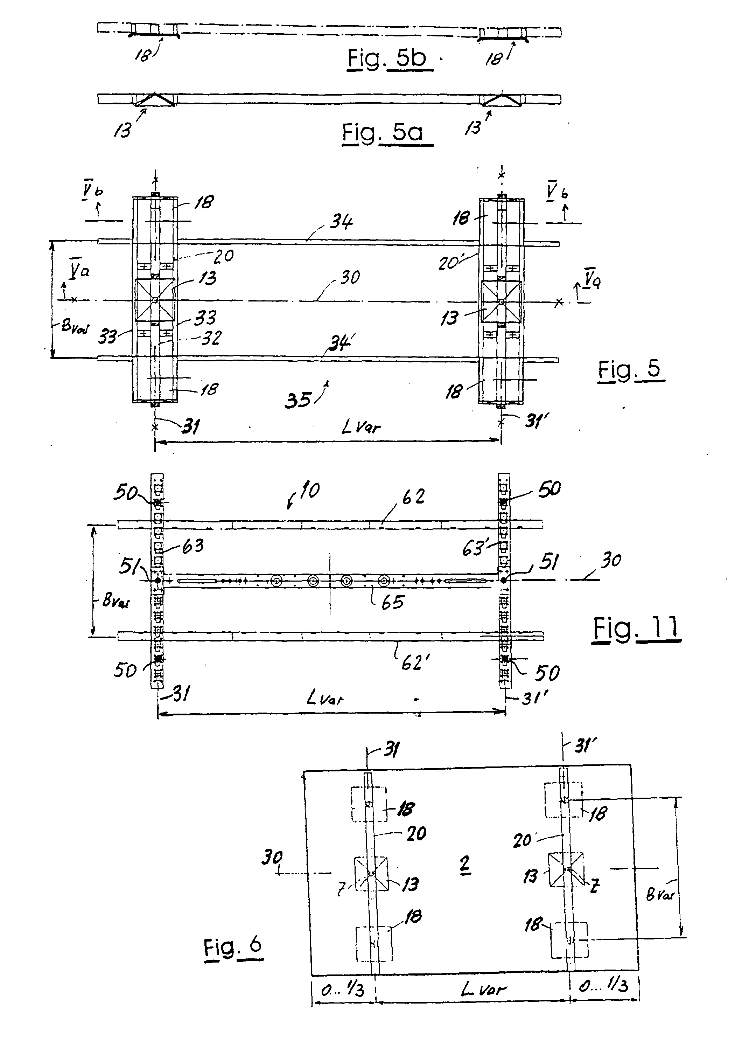

die Figur 5 einen Grundriss der Querträgerbaueinheit als Aufbaumodul;
die Figur 5a einen Schnitt 5a und
die Figur 5b einen Schnitt 5b der Figur 5;
die Figur 6 schematisch den Grundriss einer einfacheren Querträgerkonstruktion;

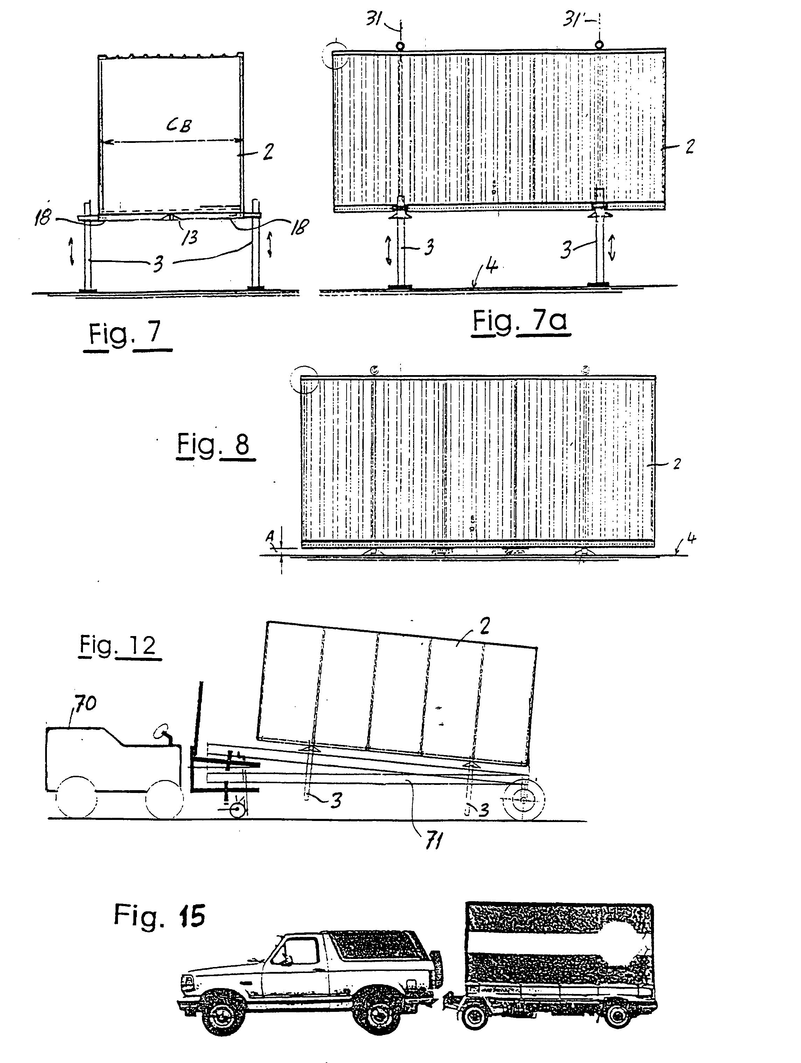

die Figur 7 und 7a zeigen einen Wechselcontainer in einer Front- und einer Seitenansicht auf Stützbeinen stehend;
die Figur 8 zeigt einen Wechselcontainer auf einer flachen Grundfläche bzw. auf dem Boden abgesenkt;

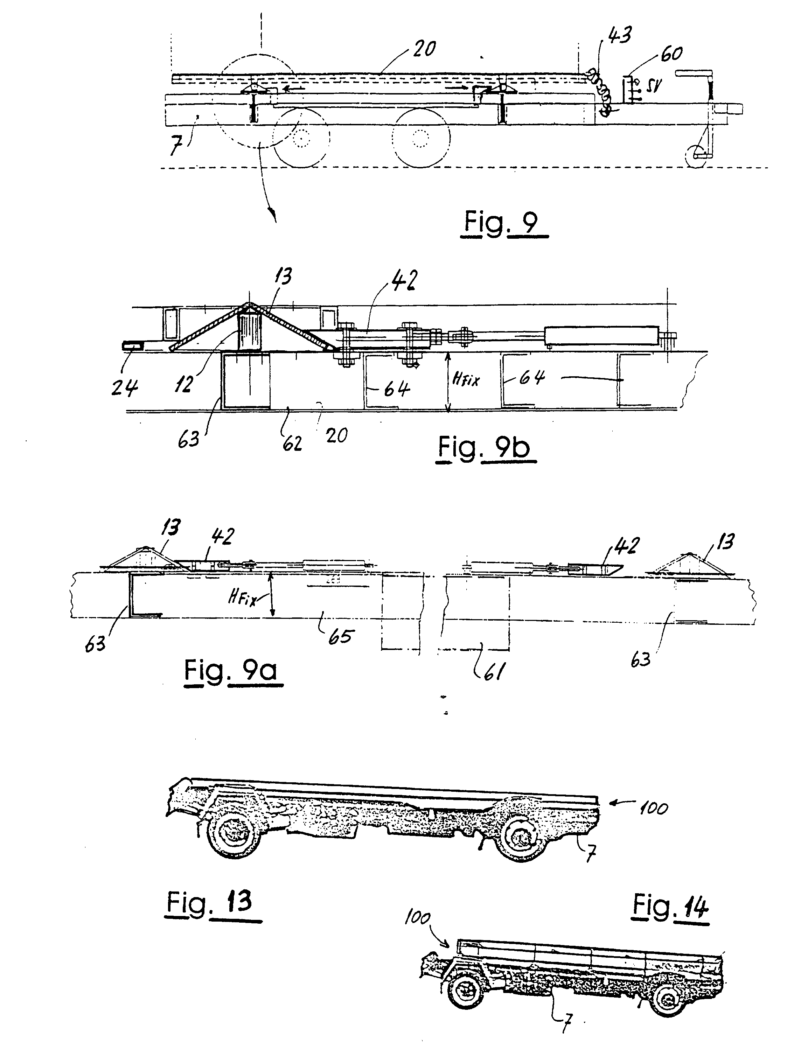

die Figur 9, 9a und 9b verschiedene Darstellungen der Sicherung des Aufbaues auf dem Fahrgestell;

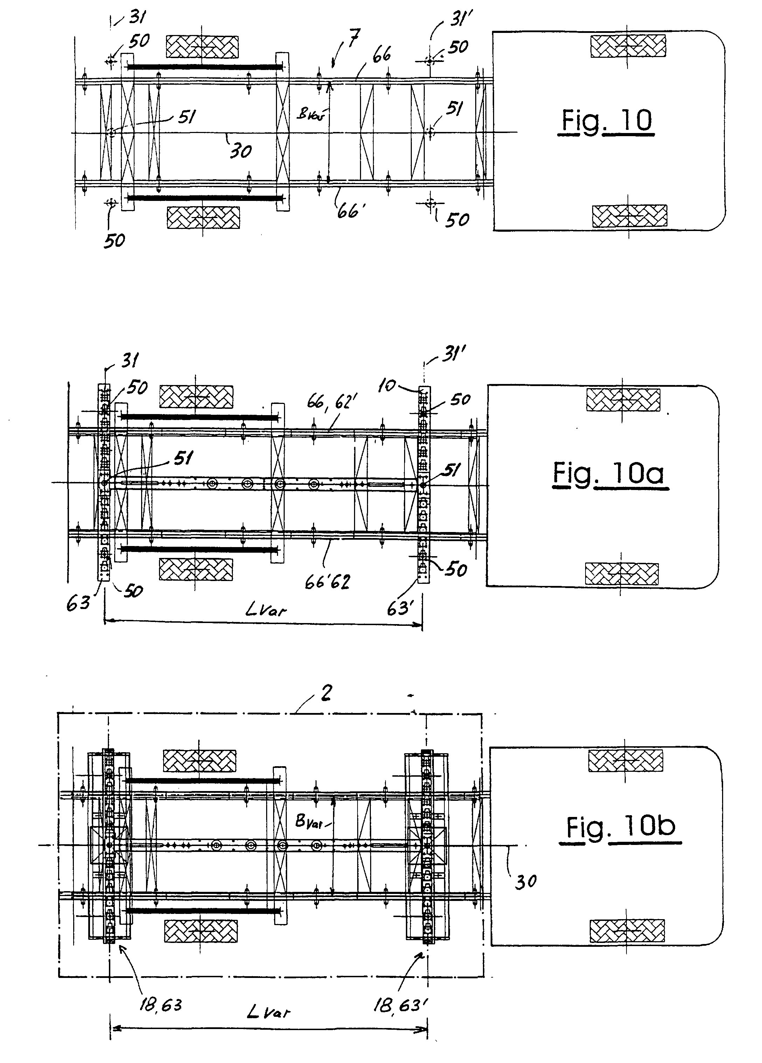

die Figur 10, 10a und 10b verschiedene Montageschritte für den Aufbau einer Wechselbühne am Fahrgestell;
die Figur 11 eine Wechselbühne als Modul im Grundriss;
die Figur 12 ein Fahrgestell für das innerbetriebliche Verschieben eines Wechselcontainers;
die Figur 13, 14 und 15 zeigen Anwendungen der neue Erfindung mit verschiedenen Aufbauten.

### Wege und Ausführung der Erfindung

In der Folge wird nun auf die Figuren 1, 1a und 1b Bezug genommen. Ein Leichtfahrzeug 1 das als Zweiachser dargestellt ist, kann z.Bsp. ein Fahrzeugtype sein, bekannt unter dem Namen Mercedes Sprinter, VWLT35, Ford Transit, IVECO usw. Links daneben ist ein Aufbau dargestellt als Wechselcontainer 2, der über Stützen 3 auf dem Boden 4 abgestützt ist. Mit einem Pfeil 6 ist angedeutet, dass das Fahrzeug 1 im Begriffe ist, mit seinem hinteren Teil seines Fahrgestelles 7 unter den Wechselcontainer 2 zu fahren. Der Wechselcontainer 2 wird danach auf das Fahrgestell montiert, wie in der Folge im Detail noch dargestellt wird. Mit Pfeil 8 ist die fertig montierte Einheit als abfahrbereites Fahrzeug symbolisiert. Die Figuren 1a und 1b zeigen zwei weitere Einsatzmöglichkeiten, nämlich den Transport mit dem Fahrzeug selbst oder mit einem Anhänger, und die Figur 1b der Transport mit beiden. Der Transport mit einem Anhänger 9 hat insofern einen grossen Vorteil, als dieser mit einem Personenwagen oder einem Jeep gezogen werden kann, im Rahmen der zulässigen Ladegewichte.

In den Figuren 2, 2a und 2b sind drei verschiedene Positionen von dem Beginn der Absenkbewegung des Aufbaues 2 bis zum Absetzen auf dem Fahrgestell dargestellt. Dabei ist die Figur 2 gleichzeitig das Ende der Abhebebewegung des Containers von der Abstützung auf den Boden über die Sützten 3. Das Fahrgestell weist oben eine Wechsellbühne 10 auf, welche ein Zwischenglied ist zwischen dem eigentlichen Fahrgestell sowie den Elemente über welche der Wechsel durchgeführt wird. Diese Elemente bestehen aus einer Abhebe-und Absenkvorrichtung 11 sowie einem Zentrierkegel 12. Der Zentrierkegel 12 bildet zusammen mit einem Einfangtrichter 13 eine Einfangtrichter/Zentrierkegelkombination 14. Die Abhebe- und Absenkvorrichtung 11 besteht aus mehreren, vorzugsweise vier Hydraulikzylindern 15, welche über eine Kolbenstange 16 sowie. einen Kolbenstangenkopf 17, je über eine Auflagerplatte 18 den Aufbau 2 stützen. Der Aufbau weist eine Plattform 19 auf, an deren Unterseite ein Querträger 20 befestigt ist, an denen sowohl der Einfangtrichter 13 wie auch die zwei Schiebeplatten/Auflagerplatten 18 fest verbunden sind. Der Querträger 20 kann als Hohlprofil ausgebildet sein, in welchem an den beiden äusseren Enden ein horizontaler Träger 21 montier- bzw. eingeschiebbar ist, der Teil der vertikalen Stützen 3 ist. Die Stützen 3 sind in der Figur 2 um ein kleines Mass X vom Boden abgehoben, das kleiner ist, als das Mass X' zwischen der Wechselbühne 10 sowie der Auflagerplatte 18 des Aufbaues. Die Differenz entspricht der Einfederung der Wechselbühne 10 auf dem Fahrgestell 7. In der Position gemäss Figur 2 können die Stützen 3 weggenommen und z.Bsp. um 90° in eine Horizontale oder um 180° in eine Vertikale verschwenkt werden. Der Aufbau 2 bzw. der ganze Container 2 ruht nun vollständig auf der Abhebe- und Absenkvorrichtung 11. Die Absenkbewegung kann beginnen. Die Kolbenstangen 16 werden zügig eingezogen und entsprechend der ganze Aufbau 2 abgesenk, bis die Spitze des Zentrierkegels 12 in Kontakt kommt mit dem Einfangtrichter 13 (Figur 2a). Der Zentrierkegel 12 ist in seiner einfachsten Ausgestaltung ein massiver runder Eisenkörper mit kegeliger Spitze und starr mit dem Fahrgestell bzw. der Wechselbühne verbunden. Der Zentrierkegel 12 kann aber auch mechanisch beweglich z.Bsp. als bewegbarer Kolben ausgebildet sein, und weitere Funktionen übernehmen. Die Hauptfunktionen der Zentrierkegel 12 sind eine Abweisung des Einfangtrichters 13, eine Zentrierung des Einfangtrichters und letztlich eine Sicherung des Aufbaues in der zentrierten Lage. Der Pfeil 22 in Figur 2a deutet die senkrechte Bewegung des Aufbaues von oben nach unten an. Der Pfeil 23 zeigt die horizontale Schiebebewegung an, die durch die Abweisbewegung zwischen Zentrierkegel 13 und der entsprechenden Schrägfläche 25' des Einfangtrichters entsteht (Fig. 4). Trotz anfänglichen Bedenken haben alle bisherigen Praxiseinsätze gezeigt, dass der entscheidende Bewegungsablauf aus der Stellung gemäss Figur 2a in die Stellung gemäss Figur 2b dann am besten abläuft, wenn der Vorgang zügig durchgeführt wird. Der Vorgang ist nicht ruckartig, wenn im Bewegungsablauf kein künstlicher Stillstand erzeugt wird. Das Fahrgestell unterstützt durch seine Einfederung und der Container durch seine Beweglichkeit mit vielen Freiheitsgraden den Bewegungsablauf, so dass der Container gleichsam in die präzise Auflageposition 'taumelt' bzw. rutscht. Es kann vorteilhaft sein, die Auflagerplatten 18 oder den Kolbenstangenkopf 17 mit einem gleitfördernden Material zu versehen. Bevorzugt werden zwischen der Wechselbühne 10 sowie der Plattform 19 dämpfende Zwischenlagen 24 vorgesehen, damit der Aufbau für die Fahrt allseits auf den dämpfenden Zwischenlagen über viele Stellen gut auf dem Fahrgestell resp. auf der Wechselbühne ruht.

Der Figur 2 ist ein weiterer wichtiger Aspekt der neuen Erfindung entnehmbar, nämlich die Grösse der Schiebeplatte sowie des Einfangtrichters. Es wird angenommen, dass die grösste Breite des Fahrgestelles WB sowie die grösste Breite CB des Containers etwa gleich ist. Die lichte Weite zwischen den Stützen Stw ist demgegenüber um ein Mass B1 und B2 grösser. B1 + B2 ist das Spiel, dass der Fahrer hat, um das Fahrgestell unter dem Aufbau 2 zu parkieren. Die Breite LB der Lagerplatten 18 und die Breite TB des Einfangtrichters sind etwa gleich und je etwa gleich gross wie B1 und B2 zusammen. In der Praxis liegt dieses Mass zwischen 20 und 50 cm. Dies hat den ganz besonderen Vorteil, dass jede Parkierungsposition innerhalb der lichten Weite Stw zwischen den Stützen zu dem gleichen Ergebnis, dem präzisen Absetzen auf dem Fahrgestell führt. Das gleiche Problem tritt in Querrichtung des Fahrzeuges, wie auch in Fahrzeuglängsrichtung auf, wie in der Figur 3 dargestellt ist. In der Figur 3a ist angedeutet, dass der Trichter vier Gleitflächen 25, 25', 25", 25"' aufweist. Jede der schrägen Gleitflächen 25 bewirkt, dass der Zentrierkegel in die Zentrumslage Z kommt (Figur 4b). Der Winkel α wird bevorzugt grösser als 90° optimal in dem Bereich von etwa 120° gewählt. Mit G ist das Gewicht des Containers angedeutet. Je mehr das Gewicht während dem Absen- ken von dem Aufbau bzw. dem Container von den Auflagern auf die Einfangtrichter verlagert wird, umso stärker ist die seitliche Schiebewirkung S auf den Container. Durch die Schiebewirkung S gleitet die Schiebeplatte/Auflagerplatte 18 über den Kolbenstangenköpfen 17. Das Schieben kommt also durch die kombinierte Wirkung von dem Einfangtrichter sowie der flachen, ebenen Schiebeplatte zustande. Würde, nur als theoretische Betrachtung, der ganzen Aufbau kurzzeitig nur auf den Spitzen der zwei Zentrierkegeln abgestützt und alle Kolbenstangen sich frei nach unten bewegen, so entstände ein vollkommen labile Lage für den Container. Der Container würde sich zwangsnotwendig auf die eine oder andere Seite neigen und so wieder die seitliche Schiebebewegung auslösen. Es entstände eine leichte Erschütterung was wiederum für die Schiebebewegung förderlich wäre. Die Einfangstrichter können auch eine andere als eine einfache Pyramidenform haben, z.Bsp. gerundete Einführflächen. Der Einfangtrichter hat die eigentliche Funktion des Einfanges des Aufbaues auf die zentrierte, sichere Lage für die Fahrt auf der Strasse. An der Gleitplatte oder an der Aufliegestelle der Kolbenstange 16 bzw. am Kolbenkopf 16' kann ein Gleitstoff G_{L} angebracht werden.

Die Figuren 5, 5a, 5b und 6 zeigen ein Containermodul einer Querträgergruppe und die systematische Anordnung der besprochenen Elemente zueinander. Die optimale Disposition liegt darin, dass die beiden Einfangtrichter 13 in der Längssymmetrieebene 30 des Containers angeordnet werden. Dies ergibt für die Taumel- und Schiebekräfte ein Optimum, resp. ähnliche oder gleiche Bedingungen in allen vier Richtungen (seitlich und längs). In Bezug auf die Kräfteübertragung bzw. Einwirkung auf den Container in Leichtbauweise empfiehlt sich die Anordnung sowohl der zwei Auflagerplatten 18 wie die Einfangtrichters 13 je hinten und vorne in einer gemeinsamen Querebene 31 resp. 31'. Ein Entsprechendes gilt für die Komplementärteile, Zentrierkegel und Abhebe- und Absenkvorrichtung bzw. deren vier Hydraulikzylinder (Figur 11). Besonders für grössere Abmessungen ist es zweckmässig, die Querträger 20 aus einem mittleren Hohlprofil 32 sowie zwei seitlichen Profilen 33 zusammenzusetzen. Beide Querträger 20 und 20' werden mit zwei Längsverbindungen 34, 34' verbunden und bilden eine Querträgerbaugruppe oder Aufbaumodul 35 die mit einer Wechselplattform bzw. dem Boden, gegebenenfalls Holzboden, eines Containers verschraubt werden kann. Für eine gute Kräfteverteilung empfiehlt sich die beiden Querachsen 20, 20' innerhalb des äusseren Drittels oder des äusseren Viertels des Containers anzuordnen. Die Ausdrücke vorne und hinten beziehen sich auf die Fahrrichtung, haben oben dann keine Bedeutung, wenn der ganze Aufbau symmetrisch konzipiert ist. Die Querträger können als Standardgruppe und die Längsverbindungen 34 jeweils an jeder Fahrzeugtype bzw. Fahrzeuggrösse angepasst werden. Optimal ist jedoch für beide Richtungen ein Standardmass. Unabhängig der konstruktiven Ausgestaltung der Querträger bilden diese bevorzgut je eine Querachse 31 resp. 31' resp. Querebenen 31, 31'.

Die Figuren 7 und 7a zeigen einen Wechselcontainer auf Stützen 3 stehend. In jeder der beiden Querebenen 31, 31' sind zwei Lagerstellen sowie je eine Einfangtrichter/ Zentrierkegelkombination, ferner zwei Stützen 3 sowie auch Kranhaken 38 angeordnet. Der Container kann aber bei Bedarf gemäss Figur 8 direkt auf den Boden 4 abgestützt werden. Dabei entsteht ein minimaler Abstand A. Der Container ruht dabei sowohl auf den Einfangtrichtern wie auch den Schiebeplatten.

In Figur 9 zeigt die Situation einer Wechselbühne mit einer Plattform 20 die auf einem Fahrgestell montiert ist, darunter vergrössert ein Sicherungssystem. Über einen doppelwirkenden Zylinder 40 wird beidseits je eine Karabinersicherung betätigt. Ein entsprechender Klemmenkeil 42 greift in die Schräge des jeweiligen Zentriertrichters 13 ein und sichert die Verbindung von der Plattform 20 und dem Fahrgestell 7. Es ist ferner auch möglich als Zusatzsicherung z.Bsp. noch eine Kettensicherung 43 anzubringen. Die Figur 9a zeigt wie beidseits, nach vorne und nach hinten, die Verriegelung eingreift. Die Figur 9b ist eine Vergrösserung einer Verriegelungsseite. Wichtig ist das Zusammenwirken aller kontaktierenden Elemente: der vielen Auflagepunkte durch die dämpfenden Zwischenlagen 24, insbesondere aber die doppelte Keilwirkung des Zentrierkegels 12 im Inneren des Einfangtrichters 13 und des Klemmkeiles 42 am äusseren des Einfangtrichters. Die Steuerungs- und Verriegelungsfunktionen SV werden von einem Steuerkasten 60 betätigt, welche bevorzugt mit der Elektrik des Fahrzeuges verbunden ist. Im gezeigten Beispiel weist die Abhebe- und Absenkvorrichtung hydraulische Zylinder auf, welche von einer zentralen Hydrauliktruppe 61 mit dem Druckmedium versorgt werden. Alle Ventile sowie die Ein- und Ausschaltung erfolgt über den Steuerkasten 60. Ferner ist es möglich im Fahrzeug Verriegelungsfunktionen vorzusehen, so dass z.Bsp. das Fahrzeug nicht wegfahren kann, wenn Grundfunktionen nicht vorschriftsgemäss durchgeführt und abgeschlossen sind. Die beweglichen Elemente des Sicherungssystems sind mit dem Fahrgestell bzw. der Wechselbühne verbunden, bleiben also Teil des Fahrzeuges. Es ist damit möglich sehr viele gleiche preisgünstige Wechselcontainer mit nur einem vollständigen Fahrzeug mit den bewegten Teilen, den motorischen Mitteln sowie der Steuerung zu bedienen.

Die Figuren 10, 10a und 10b zeigen verschiedene Aufbaustufen einer Wechselbühne 10 an einem Fahrgestell eines Leichtfahrzeuges und die Figur 11 ein einzelnes Wechselbühnenmodul. Eingezeichnet in der Figur 10 fiktiv der Ort der Lagerstellen 50 sowie der Zentrierstellen 51. Die Zentrierstellen 51 befinden sich in der Längssymmetrieebene 30. Vorne und hinten befinden sich in je einer Querachse 31' bzw. 31 je zwei Lagerstellen 50 und jeweils in der Mitte eine Zentrierstelle 51. In der Figur 10a ist eine Wechselbühnenmodul 10 (Figur 11) bereits montiert und weist körperlich die Lager- und Zentrierstellen auf. In der Figur 10b ist zusätzlich ein Container 2 mit entsprechender Plattform 2 fertig montiert, wobei der Container 2 nur strichpunktiert angedeutet ist. Die motorische Hebe- und Senkvorrichtung greift über Lagerstellen ein und ist zum synchronen Abheben bzw. Absenken der Lagerstellen ausgebildet. Bevorzugt weist sie vier über die Containergrundfläche verteilte Lagerstellen auf, an denen motorische Antriebsmittel wie Pneumatikzylinder, Hydraulikzylinder, Luftfederkissen, Spindelmotoren oder Gewindespindeln bevorzugt synchron steuerbar angreifen. Für höhrere Ansprüche ist es möglich, dass die Verstellmotoren für eine Nivellierung des Containers je als Zweiergruppe synchron oder einzeln verstellbar sind. Die Abhebe- und Absenkvorrichtung kann aber mit einem motorisch oder von Hand anbetriebenen Scheren ausgerüstet werden. Die wesentlichen Grundelemente des Wechselbühnenmoduls sind zwei Längstraversen 62, 62', einen Mittelträger 65 sowie zwei starke Quertraversen 63, 63' welche als Steckprofile mit Ausnehmung 64 (Figur 9b) ausgebildet sind. Dies erlaubt den Zusammenbau mit verschiedenen Längen- und Breitenabmessungen. Die Längstraversen können passend auf die Längsträger 66, 66' des Fahrzeuges eingestellt und starr verbunden werden. Die Länge L var sowie die Breite B var kann so auf jede Fahrzeugtype angepasst werden.

Die Figur 12 zeigt eine Hilfseinrichtung in der Form eines Gabelstaplers 70, der in der Art eines Sackkarren 71 einen Container 2 bevorzugt innerbetrieblich verschiebt. Der Sackkarren 70 greift an dem selben Lager bzw. Zentrierstellen an wie die entsprechende Elemente der Wechselbühne 10. Der Vorteil der Sackkarrenlösung liegt darin, dass mit dem selben Konzeptaufbau innerbetrieblich der Container 2 mit einem minimalen Drehkreis verschoeben und z.Bsp. auf einem ausserhalb der Gebäude liegenden Parkplatz auf Stützen 3 in eine Bereitschaftsstellung gebracht werden kann. Diese Lösung kann auch für das Verfahren auf dem eigenen Fuhrparkbereich benutzt werden. Die neue Erfindung erlaubt auch insofern eine Verbesserung der Transportlogistik. Der wasserdichte Wechselcontainer wird selbst zu einem Gebinde, das entweder von einem Warenverteilzentrum oder direkt von der Fabrikationsanlage die Waren ohne andere Transporthilfen wie Paletten usw. direkt aufnimmt. Der Container wird wie eine grosse Kiste gefüllt und an das Zielort gebracht, wo es als Vorortlager dient. Im gegebenen Zeitpunkt wird der Container geholt und für den neuen Transport eingesetzt. Insbesondere im gewerblichen Bereich kann der Handwerker selbst mit einem leichten Motorfahrzeug den Container an die gewünschte Baustelle fahren, als Stehzeug auf die Stütztbeine abstellen. Der Container kann auch als z.Bsp. als verschliessbare Baubaracke dienen (Figur 7, 7a). Die selbe Barackenfunktion gilt auch, wenn sie momentan an keiner Baustelle benötigt wird. Der Container kann beim Sitz des Unternehmens hingestellt werden und sogar für andere Zwecke genutzt werden. Die Figur 13 zeigt ein Fahrgestell 7 mit aufmontierter Wechselbühne 100. Das Fahrgestell 7 kann, wenn es nicht benötigt wird, unter dem auf Beine abgestützten Container 2 parkiert werden. Der Freiraum unter dem Container dient gleichzeitig als Anhängerabstellplatz. Die Figur 14 zeigt den Anhänger mit Fahrgestell 7, Wechselbühne 100 einer Plattform 1 sowie einem einfachen Aufbau 2 hier nur mit niederen seitlichen Läden. Die Figur 15 zeigt ein leichtes Motorfahrzeug bzw. einem Jeep mit erfindungsgemässem Anhänger, analog zu der Figur 14a jedoch mit einem geschlossenen Aufbau mit Blachenverkleidung. In der gezeigten Anwendung gemäss den Figuren 13, 14 und 15 ist der Container hauptsächlich Stehzeug, wird aber mit dem selben Fahrgestell mit Wechselbühne von Platz zu Platz verschoben. Das leichte Motorfahrzeug bleibt somit mit kleineren Unterbrüchen frei für alle anderen Aufgaben, wobei auch bei den anderen Aufgaben der Wechsel mit Hilfe der Wechselbühne erfolgen kann. Es hat sich ferner gezeigt, dass die erfindungsgemässe Lösung mit den Einfang-Zentriereinheiten sowie den Hebe-Schiebeeinheiten selbst bei schweren Lastkraftwagen verwendbar ist, vorausgesetzt alle Bauelemente werden entsprechend kräftiger dimensioniert.

## Patentansprüche

1. Einrichtung zum Transport von sperrigen Gütern mit einer Wechselbühne (10, 100) sowie einem abheb- und absenkbaren Aufbau (2), der wahlweise auf einem Fahrgestell (7) transportierbar oder auf dem Boden (4) über Stützen (3) abstützbar ist, und als Schnellwechseleinrichtung im hinteren und vorderen Bereich des Aufbaues (2) wirksame, und je im Bereich der Längsmittelachse angeordnete Einfangtrichter-Zentriereinheiten (14) aufweist,
**dadurch gekennzeichnet,**
**dass** sie mehrere, je im Bereich der äusseren Drittel der Grundfläche des Aufbaues (2) verteilte Hebe-Schiebeeinheiten (16, 18, 12, 25) mit, in einer gemeinsamen Auflageebene liegende Auflageplatte (18) aufweist, wobei die Wechselbühne (10, 100) mit wenigstens zwei Längs- und Quertraversen (62, 63) als Modul ausgebildet und an einem Fahrzeuganhänger oder direkt an dem Motorfahrzeug anbaubar ist, und eine Abhebe- und Absenkvorrichtung (11) aufweist, zum Einfangen und Schieben des Aufbaues mit dem Eigengewicht.

2. Einrichtung nach Anspruch 1,
**dadurch gekennzeichnet,**
**dass** sie wenigstens drei, vorzugsweise vier verteilte motorisch antreibbare Lagerstellen (50) zum synchronen Abheben und Absenken des Aufbaues (2) mit entsprechender Steuerung aufweist.

3. Einrichtung nach Anspruch 1 oder 2,
**dadurch gekennzeichnet,**
**dass** die Lagerstellen (50) je im Bereich der äusseren Drittel der Grundfläche des Aufbaues (2) und die Einfangtrichter/Zentrierkegelkombination (14) im Bereich der Längsmittelachse (30) des Aufbaues (2) angeordnet sind, derart, dass vorne und hinten die Lagerstellen (50) sowie die Einfangtrichter/Zentrierkegelkombination (14) je in einer gemeinsamen Querachse (31) angeordnet und die Stützen (3) bevorzugt ebenfalls je in einer entsprechenden Querebene (31) fixierbar sind.

4. Einrichtung nach einem der Ansprüche 1 bis 3,
**dadurch gekennzeichnet,**
**dass** sie in Modulbauweise wenigstens eine mit dem Fahrgestell (7) verbindbare Wechselbühne (10, 100) aufweist, an der die Abhebe- und Absenkvorrichtung (11) sowie die Zentrierkegel (12) montierbar sind, wobei die Wechselbühne (10, 100) auf dem Fahrgestell (7) vorzugsweise in dem Bereich des Einfederweges des Fahrgestelles (7) angeordnet ist.

5. Einrichtung nach einem der Ansprüche 1 bis 4,
**dadurch gekennzeichnet,**
**dass** die Längs- und Quertraversen (62, 63) einen Längs- und Querverstellbereich aufweisen, zur Anpassung an verschiedene Fahrgestellabmessungen.

6. Einrichtung nach einem der Ansprüche 1 bis 5,
**dadurch gekennzeichnet,**
**dass** die Wechselbühne (10, 100) einen mittleren Längsholmen (Mittelträger 65) aufweist, an dem die motorischen Antriebselemente (61) für die Abhebe- und Absenkvorrichtung (11) angeordnet sind.

7. Einrichtung nach einem der Ansprüche 1 bis 6,
**dadurch gekennzeichnet,**
**dass** die Längs- und Quertraversen (62, 63) als Steckprofile ausgebildet sind, wobei die Längstraversen (62, 62') vorzugsweise eine Anzahl Ausnehmungen (64) aufweisen, für das Einschieben auf ein beliebiges Breitenmass der Längstraversen.

8. Einrichtung nach einem der Ansprüche 1 bis 5,
**dadurch gekennzeichnet,**
**dass** sie in Modulbauweise wenigstens eine(n) an der Unterseite des Aufbaues (2) mit dem Aufbau (2) verbindbare(n) Querträger (20) bzw. Querträgergruppe aufweist, wobei vorzugsweise jeder Querträger (20) einen Einfangtrichter (13) und jeweils am äusseren Endbereich der Querträger (20) Schiebeplatten (18) als Auflagerstellen für die Abhebe- und Absenkvorrichtung (11) aufweist.

9. Einrichtung nach Anspruch 8,
**dadurch gekennzeichnet,**
**dass** an den Querträgern (20) beidseits Bodenstützen (3) leicht anbringbar und wengnehmbar oder wegschwenkbar sind, für einen schnellen Wechsel des Aufbaues (2) als Stehzeug oder als Teil des Fahrzeuges, wobei die Querträger (20) bevorzugt ein Hohlprofil aufweisen, in welches die Stützen (3) einsteckbar sind.

10. Einrichtung nach einem der Ansprüche 1 bis 9,
**dadurch gekennzeichnet,**
**dass** über die motorischen Antriebsmittel (61) eine Verriegelung betätigbar ist, zur Sicherung des Aufbaues (2) gegenüber der Wechselbühne (10, 100), wobei die Verriegelung vorzugsweise an den beiden Einfangtrichtern (13) angreifen.

11. Einrichtung nach einem der Ansprüche 1 bis 10,
**dadurch gekennzeichnet,**
**dass** zwei Querträger (20) je eine Querebene (31, 31') bilden, in der je sowohl die Auflagerstellen und die Einfangtrichter/ Zentrierkegelkombination (14) wie auch die Stützen (3) und die Einfang/Zentrierkombination (14) bevorzugt in je einer Längssymmetrieachse (30), und die Einfangtrichter (13) am Aufbau (2) und die Zentrierkegel (12) sowie Abhebe- und Absenkvorrichtungen (11) am Fahrgestell (7) angeordnet sind, wobei ferner an der Decke des Containers (2), besonders vorzugsweise in den zwei Querebenen (31, 31'), welche die Lagerstellen einschliessen, Kranhaken angeordnet sind und/oder dass zwischen den Lagerstellen (50) Anlageflächen für Gabelstaplereingriffe angeordnet sind.

12. Einrichtung nach einem der Ansprüche 1 bis 11,
**dadurch gekennzeichnet,**
**dass** die nutzbare Grundfläche der Einfangtrichter (13) und der Schiebeplatte/Auflagerplatten (18) etwa gleich gross sind und bevorzugt etwa in dem Bereich der Manövriergenauigkeit von etwa 20 bis 50 cm liegt, welche besonders bevorzugt etwa der Differenz zwischen den grössten Breitenabmessung der Wechselbühne (10, 100) und der freien Weite zwischen den Bodenstützen (3) entspricht.

13. Einrichtung nach einem der Ansprüche 1 bis 12,
**dadurch gekennzeichnet,**
**dass** die Auflagerplatten (18) zusammen mit den Unterkanten der Einfangtrichter (13) eine gemeinsame Auflageebene bilden, wobei die Einfangtrichter (13) vorzugsweise einen Öffnungswinkel von mehr als etwa 90° besonders vorzugsweise etwa 120° aufweisen.

14. Einrichtung nach Anspruch 1,
**daurch gekennzeichnet,**
dass sie für den Transport mit einem Motorfahrzeug mit einem Aufbau (2) der wahlweise transportierbar oder auf dem Boden (4) über Stützen (3) abstützbar und als Wechselbühne (10, 100) schnell montierbar und demontierbar, als Fahrgestell (7) des Fahrzeuges oder eines Anhängers ausgebildet ist, mit einer Abhebe- und Absenkvorrichtung (11) welche auf wenigstens drei, vorzugsweise vier, verteilte Auflagerstellen eines Aufbaues (2) einwirkt für ein synchrones Abheben und Absenken des Aufbaues (2), wobei vorne und hinten je im mittleren Bereich ein Zentrierkegel (12) angeordnet ist für eine Einfangtrichter/ Zentrierkegelkombination (14) zum Einfangen, und Schieben des Aufbaues (2) mit dem Eigengewicht sowie definierten Absetzen auf dem Fahrgestell (7), wobei die Wechselbühne (10, 100) mit wenigstens zwei Längs- und Quertraversen (62, 63) als Modul ausgebildet und an einem Fahrzeuganhänger oder direkt an dem Motorfahrzeug anbaubar ist, und die Abhebe- und Absenkvorrichtung (11) aufweist.

15. Einrichtung nach Anspruch 1,
**dadurch gekennzeichnet,**
**dass** sie für den Transport mit einem Motorfahrzeug, mit einem Aufbau (2), der wahlweise transportierbar oder auf dem Boden (4) über Stützen (3) abstützbar und als Wechselplattform (10, 100) schnell montierbar und demontierbar, als adaptierbare Plattform (19) als Aufbau (2) oder als Container mit vorne und hinten je ein Querträger (20) bzw. Querträgergruppe ausgebildet ist, mit wenigstens drei vorzugsweise vier verteilten Auflagerstellen für eine Abhebe- und Absenkvorrichtung (11) eines Fahrgestelles (7), für ein synchrones Abheben und Absenken des Aufbaues (2), wobei je im mittleren Bereich der Querträger (20) bzw. der Querträgergruppen ein Zentrierkegel (12) angeordnet ist für eine Einfangtrichter/ Zentrierkegelkombination (14), zum Einfangen und Schieben des Aufbaues (2) mit dem Eigengewicht sowie definierten Absetzen auf dem Fahrgestell (7) und die Querträger- bzw. Querträgergruppe (20) mit zwei Längsträgern in Modulbauweise ausgebildet sind.

16. Verwendung der Einrichtung nach Anspruch 1, 14 oder 15, als Wechselcontainer (2), wobei eine grössere Zahl gleicher oder gleichartiger Aufbauten (2) in der Art wie Bauschuttmulden durch ein bzw. wenige leichte Motor-Fahrzeuge von einem Nutzanwender zu einem Ziel oder einem anderen Nutzanwender transportiert wird und nach Bedarf am jeweiligen Nutzstandort ohne das Motorfahrzeug nach Bedarf stehen bleibt, oder dass der Aufbau (2) direkt auf eine Ladefläche eines Transportmittels oder auf den Boden (4) abstellbar ist, derart, dass z.Bsp. für grosse Distanzen die Stückgüter mit Bahnwagen transportiert und das Umladen mittels Kranhaken oder Gabelstapler erfolgt.

17. Verwendung der Einrichtung nach Anspruch 1, 14 oder 15 als Container, der als Transportgefäss verwendet und z.Bsp. für Paketversand, als Container für Möbelumzug oder beim Produzenten für leichte landwirtschaftliche Konsumgüter oder für leichte Industriegüter wie Isolationsmaterialien gefüllt, auf ein Fahrgestell (7) aufgesetzt und wenigstens auf einer Teilstrecke bis zum Zielort mit einem leichten Motorfahrzeug transportiert wird, wobei wenigstens die Längsseitenflächen bevorzugt als Werbeflächen ausgebildet und verwendet werden, oder aber dass der Aufbau als Messecontainer ausgebildet ist, derart, dass damit die für einen Messestand benötigten Leichtteile transportiert und die Plattform mit Aufbau als Messestand oder Teil eines Messestandes verwendet wird.

## Claims

1. Device for transporting bulky goods, with an exchange platform (10, 100) and a body (2) which can be raised and lowered and which can optionally be transported on a chassis (7) or supported on the ground (4) by supports (3), and has engaging funnel centring units (14), arranged in the region of the longitudinal central axis respectively, acting as a quick-change device in the trailing and leading region of the body (2), **characterised in that** it has a plurality of raising/sliding units (16, 18, 12, 25) distributed in the region of the outer third of the area of the body (2) respectively and with a supporting plate (18) located in a common supporting plane, the exchange platform (10, 100) being formed as a module with at least two longitudinal and transverse cross members (62, 63) and being capable of being attached to a trailer or directly to the motor vehicle, and has a raising and lowering device (11) for engaging and sliding the body using its own weight.

2. Device according to claim 1, **characterised in that** it has at least three, preferably four, distributed bearings (50), which can be driven by a motor, for synchronous raising and lowering of the body (2) with appropriate control.

3. Device according to claim 1 or 2, **characterised in that** the bearings (50) are each arranged in the region of the outer third of the area of the body (2) and the engaging funnel/centring cone combination (14) is arranged in the region of the longitudinal central axis (30) of the body (2) in such a way that the bearings (50) and the engaging funnel/centring cone combination (14) respectively are arranged in a common transverse axis (31) at the front and back and the supports (3) can also preferably each be fixed in a corresponding transverse plane (31).

4. Device according to any one of claims 1 to 3 **characterised in that** it has at least one exchange platform (10, 100) which can be connected to the chassis (7) in a modular manner, on which exchange platform (10, 100) the raising and lowering device (11) and the centring cone (12) can be assembled, the exchange platform (10, 100) being arranged on the chassis (7) preferably in the region of the spring deflection path of the chassis (7).

5. Device according to any one of claims 1 to 4, **characterised in that** the longitudinal and transverse cross members (62, 63) have a longitudinal and transverse adjusting range to adapt to various chassis dimensions.

6. Device according to any one of claims 1 to 5, **characterised in that** the exchange platform (10, 100) has central longitudinal bar (central beam 65) on which the motive drive elements (61) for the raising and lowering device (11) are arranged.

7. Device according to any one of claims 1 to 6, **characterised in that** the longitudinal and transverse cross members (62, 63) are formed as plug-in profiles, the longitudinal cross members (62, 62') preferably having a number of recesses (64) for insertion at any point along the width of the longitudinal cross members.

8. Device according to any one of claims 1 to 5, **characterised in that** it has at least one transverse beam (20) or transverse beam group which can be connected at the bottom of the body (2) to the body (2) in a modular manner, each transverse beam (20) preferably having an engaging funnel (13) and sliding plates (18) as supporting points for the raising and lowering device (11) at the external end region of the transverse beam (20) respectively.

9. Device according to claim 8, **characterised in that** ground supports (3) can easily be attached and removed or pivoted back on both sides of the transverse beams (20) for a quick change-over of the body (2) as a stand or as part of the vehicle, the transverse beam (20) preferably having a hollow profile in which the supports (3) can be inserted.

10. Device according to any one of claims 1 to 9, **characterised in that** a catch can be actuated by the motive drive means (61) to secure the body (2) with respect to the exchange platform (10, 100), the catch preferably engaging on the two engaging funnels (13).

11. Device according to any one of claims 1 to 10, **characterised in that** two transverse beams (20) form one transverse plane (31, 31') respectively in which both the bearings and the engaging funnel/centring cone combination (14) and the supports (3) and the engaging/centring combination (14) respectively are preferably arranged in one longitudinal axis of symmetry (30) respectively and the engaging funnel (13) is arranged on the body (2) and the centring cone (12) and raising and lowering devices (11) are arranged on the chassis (7), cranehooks, moreover, being arranged on the covering of the container (2), particularly preferably in the two transverse planes (31, 31') which enclose the bearings, and/or **in that** contact faces for forklift truck operations are arranged between the bearings (50).

12. Device according to any one of claims 1 to 11, **characterised in that** the usable area of the engaging funnel (13) and the sliding plate/supporting plates (18) are approximately the same size and are preferably approximately in the range of manoeuvring accuracy of approximately 20 to 50 cm, which particularly preferably corresponds approximately to the difference between the largest width dimension of the exchange platform (10, 100) and the free width between the ground supports (3).

13. Device according to any one of claims 1 to 12 **characterised in that** the supporting plates (18) together with the bottom edges of the engaging funnel (13) form a common supporting plane, the engaging funnel (13) preferably having an angle of aperture of more than approximately 90°, particularly preferably approximately 120°.

14. Device according to claim 1, **characterised in that** it is designed for transportation by a motor vehicle, with a body (2) which can optionally be transported or can be supported on the ground (4) by supports (3) and can be quickly assembled and disassembled as an exchange platform (10, 100), as a chassis (7) of the vehicle or a trailer, with a raising and lowering device (11) which acts on at least three, preferably four, distributed bearings of a body (2) for synchronous raising and lowering of the body (2), a centring cone (12) being arranged in the central region at the front and back respectively for an engaging funnel/centring cone combination (14) for engaging and sliding the body (2) using its own weight and for defined placement on the chassis (7), the exchange platform (10, 100) being formed as a module with at least two longitudinal and transverse cross members (62, 63) and being attachable to a trailer or directly to the motor vehicle, and comprising the raising and lowering device (11).

15. Device according to claim 1, **characterised in that** it is designed for transportation by a motor vehicle, with a body (2) which can optionally be transported or supported on the ground (4) by supports (3) and can be quickly assembled and disassembled as an exchange platform (10, 100), as an adaptable platform (19), as a body (2) or as a container, with a transverse beam (20) or transverse beam group at the front and back respectively, with at least three, preferably four distributed bearings for a raising and lowering device (11) of a chassis (7), for synchronous raising and lowering of the body (2), a centring cone (12) being arranged in the central region of the transverse beam (20) or the transverse beam group respectively for an engaging funnel/centring cone combination (14) for engaging and sliding the body (2) using its own weight and defined placement on the chassis (7) and the transverse beams or transverse beam group (20) being formed with two longitudinal beams in a modular manner.

16. Use of the device according to claim 1, 14 or 15 as an exchange container (2), wherein a relatively large number of identical or similar bodies (2), like rubble troughs, is transported by a user to a destination or another user by one or a few light motor vehicles and, if required, is left at the respective site of use without the motor vehicle, or in that the body (2) can be set down directly on a loading area of a transportation means or on the ground (4) in such a way that, for example for great distances, the goods are transported by trains and are unloaded by means of cranehooks or forklift trucks.

17. Use of the device according to claim 1, 14 or 15 as a container which is used as a transportation container and is filled, for example, for parcel despatch, as a container for moving furniture or by producers for light agricultural consumer goods or for light industrial goods such as insulation materials, is placed on a chassis (7) and is transported to the destination by a light motor vehicle, at least for part of the journey, wherein at least the longitudinal sides are preferably formed and used as advertising areas, or else the body is formed as an exhibition container in such a way that the light parts required for an exhibition stand are transported thereby and the platform with the body is used as an exhibition stand or part of an exhibition stand.

## Revendications

1. Dispositif de transport de marchandises volumineuses, comprenant une plate-forme amovible (10, 100), ainsi qu'une structure carrossée (2) à lever et abaisser, qui, au choix, peut être transportée sur un châssis de véhicule (7) ou être posée sur le sol (4) en appui sur des béquilles (3), et comprenant, en tant que dispositif de transbordement rapide, des unités de centrage avec cône de réception (14) disposées dans la zone avant et arrière de la structure carrossée (2) et respectivement dans la zone de l'axe médian longitudinal,
**caractérisé en ce que**
ledit dispositif comporte plusieurs unités à déplacement vertical et horizontal (16, 18, 12, 25), disposée chacune dans la zone du tiers extérieur de la surface de base de la structure carrossée (2) et munie chacune d'une plaque de support (18) située dans un plan de support commun, la plate-forme amovible (10, 100) étant conçue sous forme de module avec au moins deux barres longitudinales et transversales (62, 63) et pouvant être assemblée à une remorque ou directement à un véhicule automobile, et comporte un dispositif de levage et de descente (11), destiné à recevoir et faire coulisser la structure carrossée avec son propre poids.

2. Dispositif selon la revendication 1, **caractérisé en ce qu'**il comprend au moins trois, de préférence quatre zones de pose (50) susceptibles d'être actionnées par un moteur et destinées à faire monter et descendre dans un mouvement synchrone la structure carrossée (2) au moyen d'une commande appropriée.

3. Dispositif selon la revendication 1 ou 2, **caractérisé en ce que** les zones de pose (50) sont disposées chacune dans la partie du tiers extérieur de la surface de base de la structure carrossée (2) et le système combiné avec cônes de centrage et de réception (14) est disposé dans la zone de l'axe médian longitudinal de la structure carrossée (2), de telle sorte que, à l'avant et à l'arrière, les zones de pose (50), ainsi que le système combiné avec cônes de centrage et de réception (14) sont disposés chacun dans un axe transversal (31) commun et les béquilles (3) peuvent être fixées de préférence chacune également dans un plan transversal (31) correspondant.

4. Dispositif selon l'une quelconque des revendications 1 à 3, **caractérisé en ce que**, dans un mode de construction modulaire, il comporte au moins une plate-forme amovible (10, 100), qui peut être assemblée avec le châssis du véhicule (7) et sur laquelle peuvent être montés le dispositif de levage et de descente (11), ainsi que les cônes de centrage (12), la plate-forme amovible (10, 100) étant disposée de préférence dans la zone de débattement du ressort du châssis de véhicule (7).

5. Dispositif - selon l'une quelconque des revendications 1 à 4, **caractérisé en ce que** les barres longitudinales et transversale (62, 63) comportent une zone de réglage dans le sens longitudinal et transversal, en vue de les ajuster aux différentes dimensions des châssis de véhicule.

6. Dispositif selon l'une quelconque des revendications 1 à 5, **caractérisé en ce que** la plate-forme amovible (10, 100) comporte un longeron longitudinal médian (support médian 65), sur lequel sont disposés les éléments de commande (61), actionnés par moteur, destinés au dispositif de levage et de descente (11).

7. Dispositif selon l'une quelconque des revendications 1 à 6, **caractérisé en ce que** les barres longitudinales et transversales (62, 63) sont conçues sous forme de profilés emboîtables, les barres longitudinales (62, 62') étant munies de préférence d'un nombre donné de cavités (64), afin d'y faire coulisser les barres longitudinales sur une largeur quelconque.

8. Dispositif selon l'une quelconque des revendications 1 à 5, **caractérisé en ce que**, dans un mode de construction modulaire, il comporte au moins une barre transversale (20) ou un groupe de barres transversales à assembler avec la structure carrossée (2) sur la face inférieure de la structure carrossée (2), chaque barre transversale (20) étant munie de préférence d'un cône de réception (13), et comporte des plaques à mouvement horizontal (18), disposées chacune sur une extrémité de la barre transversale (20) et formant des surfaces de support pour le dispositif de levage et de descente (11).

9. Dispositif selon la revendication 8, **caractérisé en ce que** des béquilles (3) sont disposées de part et d'autre des barres transversales (20) de façon à être facilement montées et démontées ou rabattues, afin de pouvoir transformer rapidement la structure carrossée (2) en un élément sur pieds ou en une partie du véhicule, les barres transversales (20) comportant de préférence un profil creux, dans lequel peuvent s'emboîter les béquilles (3).

10. Dispositif selon l'une quelconque des revendications 1 à 9, **caractérisé en ce que** les moyens de commande (61), actionnés par moteur, permettent de manoeuvrer un dispositif de blocage, afin de poser de manière fiable la structure carrossée (2) sur la plate-forme amovible (10, 100), le dispositif de blocage entrant en prise de préférence avec les deux cônes de réception (13).

11. Dispositif selon l'une quelconque des revendications 1 à 10, **caractérisé en ce que** deux barres transversales (20) forment chacune un plan transversal (31, 31'), dans lequel non seulement les zones de pose et le système combiné avec cônes de centrage et de réception (14), mais aussi les béquilles (3) et le système combiné de centrage et de réception (14) sont disposés de préférence chacun dans un axe de symétrie longitudinal (30), et **en ce que** les cônes de réception (13) sont disposés sur la structure carrossée (2) et les cônes de centrage (12), ainsi que les dispositifs de levage et de descente (11) sont disposés sur le châssis du véhicule, sachant que, par ailleurs, des crochets de grue sont disposés sur la paroi supérieure du conteneur (2), en particulier de préférence dans les deux plans transversaux (31, 31'), dans lesquels sont disposées les zones de pose, et/ou des surfaces de contact formant des zones de prise pour les fourches des chariots élévateurs sont disposées entre les zones de pose (50).

12. Dispositif selon l'une quelconque des revendications 1 à 11, **caractérisé en ce que** les surfaces de base utiles des cônes de réception (13) et des plaques à mouvement horizontal et/ou plaques de support (18) sont pratiquement de même dimension et se situent dans le domaine de précision de manoeuvre de 20 à 50 cm environ, lequel correspond en particulier, de préférence, pratiquement à la différence entre la plus grande largeur de la plate-forme amovible (10, 100) et la largeur intérieure entre les béquilles (3).

13. Dispositif selon l'une quelconque des revendications 1 à 12, **caractérisé en ce que** les plaques de support (18) forment avec les bords inférieurs des cônes de réception (13) un plan de support commun, les cônes de réception (13) formant de préférence un angle d'ouverture de plus de 90° environ, en particulier de préférence égal à 120° environ.

14. Dispositif selon la revendication 1, **caractérisé en ce qu'**il est conçu pour le transport avec un véhicule automobile muni d'une structure carrossée (2) qui, au choix, peut être transportée ou posée sur le sol (4) au moyen de béquilles (3), et sous forme de plate-forme amovible (10, 100) qui peut être rapidement montée et démontée, sous forme de châssis (7) d'un véhicule ou d'une remorque, comprenant un dispositif de levage et de descente (11), qui agit sur au moins trois, de préférence quatre zones de pose réparties et destinées à une structure carrossée (2), pour faire monter et descendre dans un mouvement synchrone la structure carrossée (2), un cône de centrage (12) étant disposé à l'avant et à l'arrière, respectivement dans la zone centrale, appartenant à un système combiné avec cônes de centrage et de réception (14) destiné à recevoir et faire coulisser la structure carrossée (2) avec son propre poids, ainsi qu'à la déposer de manière définie sur le châssis de véhicule (7), la plate-forme amovible (10, 100) étant conçue sous forme de module avec au moins deux barres longitudinales et transversales (62, 63) et pouvant être assemblée à une remorque ou directement à un véhicule automobile, et comporte un dispositif de levage et de descente (11).

15. Dispositif selon la revendication 1, **caractérisé en ce qu'**il est conçu pour le transport avec un véhicule automobile muni d'une structure carrossée (2) qui, au choix, peut être transportée ou posée sur le sol (4) au moyen de béquilles (3), et sous forme de plate-forme amovible (10, 100) qui peut être rapidement montée et démontée, sous forme de plate-forme adaptable (19), sous forme de structure carrossée (2) ou de conteneur muni d'une barre transversale (20) ou un groupe de barres transversales, disposée chacune à l'avant et à l'arrière, comprenant au moins trois, de préférence quatre zones de pose réparties et destinées à un dispositif de levage et de descente (11) d'un châssis de véhicule (7), pour faire monter et descendre dans un mouvement synchrone la structure carrossée (2), un cône de centrage (12) étant disposé dans la zone centrale de chaque barre transversale (20) ou groupe de barres transversales, appartenant à un système combiné avec cônes de centrage et de réception (14) destiné à recevoir et faire coulisser la structure carrossée (2) avec son propre poids, ainsi qu'à la déposer de manière définie sur le châssis de véhicule (7), et les barres transversales ou groupe de barres transversales (20) étant conçues dans un mode de construction modulaire avec deux barres longitudinales.

16. Utilisation du dispositif selon la revendication 1, 14 ou 15, conçu sous forme de conteneur interchangeable (2), un nombre relativement grand de structures carrossées (2) identiques ou de même type, constituant par exemple des bacs pour matières en vrac, étant transportées par un ou quelques véhicules moteurs légers d'un utilisateur vers une destination ou vers un autre utilisateur et, en fonction des besoins, reste immobilisé sur le site sans que, en fonction des besoins, le véhicule moteur reste immobilisé, ou en ce que la structure carrossée (2) peut être posée directement sur une surface de chargement d'un moyen de transport ou sur le sol (4), de telle sorte que, par exemple, pour de grandes distances, les marchandises de détail peuvent être transportées sur un véhicule ferroviaire et que le déchargement peut être effectué au moyen des crochets de grue ou d'un chariot élévateur.

17. Utilisation du dispositif selon la revendication 1, 14 ou 15, conçu sous forme de conteneur, qui est utilisé comme un conteneur de transport et pour l'expédition de paquets, par exemple, conçu sous forme de conteneur de déménagement ou de transport de biens de consommation agricoles de faible poids ou de biens industriels de faible poids, tels que les matériaux isolants, chargés dans le conteneur chez les producteurs, puis est posé sur un châssis de véhicule (7) et au moins sur une partie du trajet est transporté jusqu'à destination par un véhicule moteur léger, dans lequel conteneur au moins les parois latérales longitudinales sont conçues et utilisées de préférence comme des surfaces publicitaires, ou en ce que la structure carrossée est conçue sous forme de conteneur pour des salons d'exposition, de telle sorte que toutes les pièces de faible poids nécessaires pour le stand d'exposition peuvent être transportées et la plate-forme avec la structure carrossée est utilisée comme stand d'exposition ou une partie d'un stand d'exposition.
